# DEMANDE DE BREVET EUROPEEN

(11) **EP 1 432 247 A1**
(43) Date de publication de la demande: **23.06.2004**
(21) Numéro de dépôt: 03293015.8
(22) Date de dépôt: 02.12.2003
(51) Int. Cl.: H04N 5/783

(54) **Procédé et dispositif de décodage et d'affichage en marche avant accélérée d'images MPEG, circuit pilote vidéo et boîtier décodeur incorporant un tel dispositif**

(30) Priorité: 20.12.2002 FR 0216327
(71) Demandeur: STMicroelectronics S.A., 94253 Gentilly Cédex (FR)
(72) Inventeur: Roelens, Frédéric, 75014 Paris (FR)
(74) Mandataire: Verdure, Stéphane

(57) **Abrégé**

Un procédé de décodage et d'affichage en marche avant à une vitesse théorique xN d'images codées selon la norme MPEG applique des règles de décodage et d'affichage, en fonction de la valeur d'un retard des images affichées par rapport à des images théoriques déterminées par un affichage à ladite vitesse théorique, selon des seuils (N1, N2, N3, N4) déterminés.

## Description

La présente invention se rapporte au décodage et à l'affichage de programmes audiovisuels contenus dans un flux de données numériques compressées.

Elle trouve des applications dans les décodeurs vidéo comportant une fonctionnalité d'enregistrement numérique personnel (PVR, de l'anglais "Personal Video Recorder"). Dans de tels décodeurs, un enregistrement de programmes est effectué sur un support numérique de stockage de masse (ou DSM, de l'anglais "Digital Storage Media") tel qu'un disque dur, une cassette vidéo numérique, un DVD ("Digital Versatile Disk"), etc...

Les décodeurs concernés sont notamment les boîtiers décodeurs ("Set-Top Box" en anglais) assurant l'interface entre une arrivée de signaux numériques diffusés en temps réel par satellite, par câble ou par diffusion numérique terrestre (ou DVB, de l'anglais "Digital Video Broadcasting") d'une part, et un téléviseur analogique d'autre part. Un tel boîtier décodeur est un appareil autonome ("Stand-alone"). Mais l'invention s'applique aussi aux décodeurs intégrés à un téléviseur numérique, ou à un appareil numérique de lecture/enregistrement tel qu'un lecteur de DVD, un lecteur de cassettes vidéo numériques ("Digital Video Cassette Recorder"), ou similaire.

Un boîtier décodeur reçoit un ou plusieurs programmes sous la forme d'un flux de données numériques compressées, c'est-à-dire dont les trames vidéo (i.e., les images) et les trames audio sont codées de manière à réduire le volume des données diffusées. Par exemple, ce codage respecte les spécifications de la norme MPEG-2 (ISO/IEC 13818-2) ci-après norme MPEG ("Motion Pictures Expert Group"). Cette norme définit une technique de compression de données pour le codage des images animées et du son (notamment pour la télévision numérique).

Dans la présente description, le terme "présentation", lorsqu'il est utilisé en relation avec un programme, désigne la restitution des données audio et vidéo décodées, sous forme respectivement audible et visible par un utilisateur. Le terme "lecture" ("playback" en anglais), utilisé en relation avec un programme, désigne plus spécifiquement le décodage et l'affichage du programme à partir d'un enregistrement du programme sur un disque dur. Le terme affichage ("display" en anglais) est plus particulièrement utilisé pour désigner la présentation des trames vidéo.

Le disque dur permet d'offrir un certain nombre de fonctionnalités, notamment la mise en oeuvre de modes de lecture évolués ("trick modes", en anglais), c'est-à-dire une lecture à une vitesse différente d'une vitesse nominale (x1) en marche avant. Il s'agit notamment de la lecture en marche arrière ("rewind") accélérée ou non et de l'avance rapide ("fast forward").

Un affichage en marche avant à une vitesse nominale (x1), signifie qu'on affiche une trame c'est-à-dire une image à chaque événement de synchronisation verticale (ci-après VSYNC) du dispositif d'affichage, dans l'ordre d'affichage en marche avant des images. Un affichage à une vitesse x2 signifie en théorie que si à un VSYNC, on affiche la trame de rang n, alors on affiche au VSYNC suivant la trame de rang n+2, les rangs se référant ici à l'ordre d'affichage des images en marche avant à la vitesse nominale (x1). Ce saut dans les images affichées donne une impression de lecture à vitesse accélérée. Plus généralement à une vitesse xN, où N est un nombre strictement supérieur à 0, on affiche en théorie à chaque VSYNC, la trame de rang N par rapport à la trame affichée précédemment. Dit autrement, on affiche théoriquement une image sur N.

Les problèmes rencontrés pour la mise en oeuvre de l'affichage rapide en marche avant sont en partie liés à la constitution même d'un flux MPEG. En effet, afficher une image toutes les N images demande toutefois un traitement de l'ensemble des données, puisque la structure des flux n'est pas figée. Cela ne revient pas simplement à ignorer les images qui ne sont pas à afficher, car seules les images I au sens de la norme MPEG contiennent l'ensemble des informations nécessaires à leur décodage.

Ainsi, pour afficher une image P au sens de la norme MPEG, par exemple, il faut parfois décoder de nombreuses images antérieures. Donc le décodeur doit en théorie pouvoir décoder plus rapidement l'ensemble des images pour afficher à une vitesse supérieure à x1.

De plus, le fait d'afficher en marche avant en vitesse accélérée met en évidence les limitations en terme de vitesse de traitement, de débit ou de temps d'accès de l'ensemble des éléments constitutifs du boîtier décodeur. Les éléments limitants possibles sont ainsi le décodeur MPEG comme on vient de le voir, mais aussi le disque auquel les accès vont être multipliés, le démultiplexeur, le désembrouilleur et l'interface avec la carte contenant les clés de désembrouillage, dans le cas de données stockées multiplexées et/ou embrouillées.

Ainsi réaliser un affichage en marche avant accélérée à la vitesse xN demande en pratique un certain nombre d'aménagements par rapport à la règle théorique qui est d'afficher une image sur N, à chaque événement VSYNC.

Les méthodes selon l'art antérieur proposent de n'afficher que les images de type I, ou encore de geler l'image en cours tant que l'image devant théoriquement être affichée n'a pas été décodée. Mais ces méthodes ne sont pas complètement satisfaisantes. En particulier, le second cas équivaut à limiter l'ensemble du processus à la vitesse de l'élément du boîtier décodeur qui est le plus lent.

Un but de l'invention est, parmi d'autres, de proposer des règles permettant d'optimiser l'affichage des images à une vitesse sélectionnée en fonction des performances de la chaîne de traitement du flux de données, allant de l'extraction des données à partir du disque dur jusqu'à l'affichage.

Un premier aspect de l'invention propose ainsi un procédé de décodage et d'affichage en marche avant à une vitesse théorique xN déterminée, où N est un nombre supérieur à zéro correspondant à un facteur de vitesse d'affichage par rapport à une vitesse nominale x1, d'images codées selon la norme MPEG comprenant des images de type I et des images prédites de type P et/ou de type B qui sont stockées sur un support numérique de stockage de masse sous la forme d'un flux de données compressées correspondant à un programme audiovisuel déterminé. Ces étapes sont réalisées afin de décider quelles sont les images à décoder et à afficher, et consistent à :
- évaluer en temps réel à des instants d'affichage respectifs déterminés, un retard des images affichées par rapport à des images théoriques déterminées par un affichage à ladite vitesse théorique, et
- si ledit retard est inférieur à un premier seuil déterminé, décoder toutes les images du flux de données ;
- si le retard est supérieur audit premier seuil, ne plus décoder certaines au moins des images prédites du flux de données ; et,
- à chaque instant d'affichage, afficher celle des images décodées disponibles pour l'affichage et venant avant l'image théorique correspondant audit instant d'affichage dans l'ordre d'affichage des images à la vitesse nominale, qui est la plus proche de ladite image théorique suivant ledit ordre d'affichage.

Un exemple de calcul du retard d'affichage des images décodées par rapport à la vitesse théorique est exposé ci-dessous.

A noter qu'on se place ici au niveau de l'image dans un but de généralisation de l'exposé, mais que le procédé s'applique de la même façon à chacun des champs ("Fields") d'une image dans le cas d'un système d'affichage entrelacé ("Interleaved Display").

Considérons le cas où les images prédites comprennent des images de type B. Si le retard est supérieur au premier seuil, le procédé propose avantageusement de ne plus décoder, et donc de ne plus afficher les images prédites de type B. Réaliser des sauts de taille égale au temps de décodage et d'affichage d'une image de type B permet de diminuer d'autant le retard d'affichage par rapport à la vitesse théorique, sans perturber les décodages des autres images puisque aucune image n'est prédite à partir des images de type B.

De préférence, si le retard est supérieur à un deuxième seuil supérieur audit premier seuil, on ne décode plus et donc on n'affiche plus en outre certaines au moins des images prédites de type P, ni les images prédites à partir desdites images de type P. Ne pas décoder une image de type P rend effectivement impossible le décodage des images de type B et de type P qui sont prédites à partir de cette image de type P. Cela a lieu si le saut des images de type B ne suffit pas pour maintenir le retard en dessous du deuxième seuil.

Avantageusement, si le retard est supérieur à un troisième seuil supérieur audit deuxième seuil, on ne décode plus et donc on n'affiche plus que les images de type I. Dit autrement, les images prédites ne sont plus décodées.

De préférence, si le retard est supérieur à un quatrième seuil supérieur audit troisième seuil, on effectue un saut en avant dans le flux de données compressées.

Ces règles permettent de décoder un maximum d'images en fonction des performances des divers éléments constitutifs de la chaîne de traitement du boîtier décodeur, tout en évitant les dérives trop importantes par rapport à la vitesse théorique.

Dans un mode de mise en oeuvre avantageux, le retard d'affichage est défini en tant que nombre d'images de retard, en prenant comme référence une base de temps virtuelle calée sur les événements de synchronisation verticale (VSYNC) de l'affichage, et en comparant à chacun de ces événements l'image affichée à celle qui devrait être affichée suivant la vitesse théorique xN.

De préférence, le nombre d'octets du flux de données numériques qui sont sautés en avant dans le flux de données si le retard est supérieur au quatrième seuil, est déterminé à partir du nombre d'images de retard et du débit binaire moyen de la lecture dudit flux de données compressées sur le support numérique de stockage de masse. Plus précisément, il est déterminé comme le produit de ces deux grandeurs. Ceci permet de pallier le fait que la localisation des images n'est pas connue dans le flux de données compressées. En effet, un tel saut dans la lecture des données sur le support numérique permet de compenser approximativement le retard constaté, bien que celui-ci soit exprimé en un nombre d'unités (images) qui ne correspond pas directement à l'organisation des données sur le support.

Avantageusement, la base de temps virtuelle est définie par un paramètre égal au nombre théorique d'images passées par événement de synchronisation verticale de l'affichage. Par exemple, si la vitesse théorique est x2, le nombre théorique d'images passées par VSYNC est de 2 images (à la place d'une image par VSYNC pour le cas de la vitesse nominale x1). La base de temps virtuelle ainsi définie a une fréquence deux fois plus élevée que la base de temps des instants d'affichage. Par ailleurs, on notera que pour des opérations comme le "gel d'image" ou l'"avance image par image", le paramètre sera respectivement égal à zéro et à l'unité.

De préférence, la vitesse d'affichage théorique est commandée par un utilisateur, et peut être la vitesse d'affichage nominale ou une vitesse accélérée ou ralentie par rapport à ladite vitesse nominale. La commande de l'utilisateur peut se faire par exemple par l'intermédiaire d'une télécommande. D'autres cas peuvent être envisagés, notamment dans des applications de vidéo à la demande ("Video-On-Demand" ou VOD, en anglais), où l'utilisateur peut avoir accès avant un quelconque paiement, à une présentation à vitesse accélérée des programmes qu'il peut acheter.

Dans une mise en oeuvre avantageuse du procédé objet de l'invention, le paramètre égal au nombre théorique d'images passées par événement de synchronisation verticale est une fraction du type M/Q, où M et Q sont des nombres entiers et où la fraction M/Q est réduite. En effet, le fait de travailler avec de nombres entiers, et non des nombres réels, permet de réduire la propagation et l'accumulation d'erreurs d'arrondi. Par exemple, pour un écran NTSC, on préférera considérer la fréquence d'affichage égale au quotient 30 000 / 1 001 Hz. En outre, le fait de considérer une fraction qui est réduite permet d'alléger le traitement selon le procédé de l'invention. Par exemple, pour une vitesse d'affichage théorique de 4/2, le procédé est optimisé si on considère que la base de temps virtuelle est de deux images passées par VSYNC, plutôt que quatre images passées tous les deux VSYNC.

A noter qu'il n'y a pas d'hypothèse faite sur la vitesse à laquelle sont fournies les données en entrée du décodeur MPEG, ni sur la structure des groupes d'images ("Group Of Images" ou GOP) au sens de la norme MPEG. Par exemple, si un flux ne comporte que des images de type I et des images prédites de type P, il suffit de donner des valeurs égales au premier et au deuxième seuils.

Un deuxième aspect de l'invention se rapporte à un dispositif comprenant des moyens pour la mise en oeuvre du procédé ci-dessus.

Un troisième aspect de l'invention se rapporte à un circuit pilote vidéo ("Video Driver" en anglais) comprenant un dispositif selon le deuxième aspect.

Un quatrième aspect de l'invention concerne un boîtier décodeur ("Set-Top Box" en anglais) comprenant un circuit pilote vidéo selon le troisième aspect.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma qui présente un dispositif pour la mise en oeuvre de l'invention ;
- la figure 2 est un schéma synoptique présentant les étapes du procédé selon un mode de mise en oeuvre du procédé de l'invention ;
- la figure 3 est un schéma illustrant un exemple de GOP au sens de la norme MPEG, et les liens de prédiction entre les différentes images du GOP;
- la figure 4 est un tableau illustrant des images codées présentes dans une portion du flux de données contenue dans une mémoire tampon après lecture sur le support numérique de stockage de masse ;
- la figure 5 est un tableau contenant les mêmes images que celles de la figure 4 à partir d'une image donnée, et ordonnées suivant l'ordre d'affichage en marche avant à la vitesse nominale ;
- la figure 6 est un graphe représentant en abscisse les événements de la base de temps d'affichage (VSYNC) et en ordonnée le retard évalué aux différents instants d'affichage, dans un exemple de mise en oeuvre du procédé de l'invention .

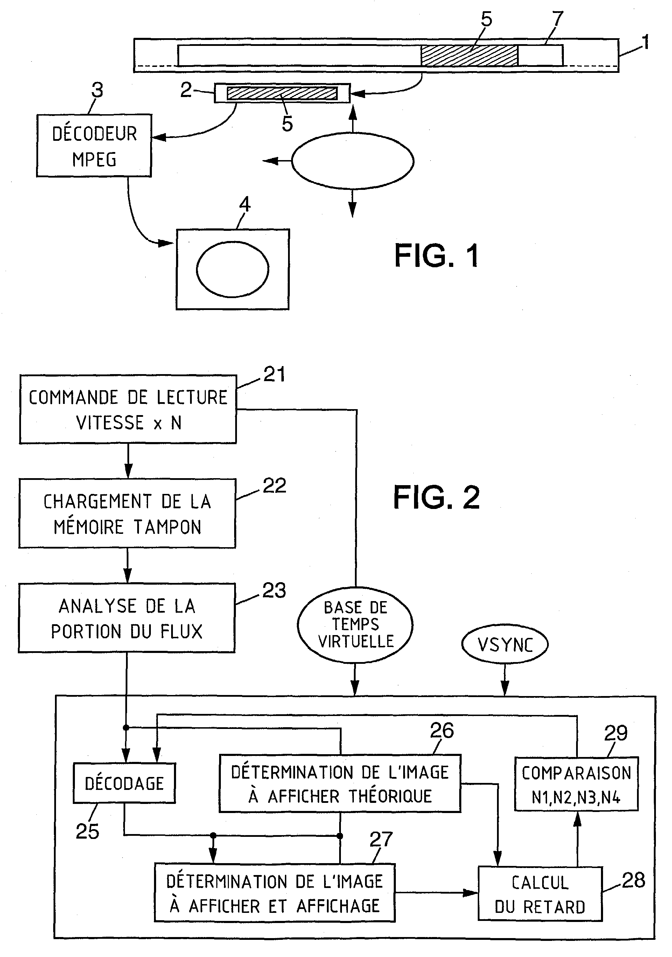

La figure 1 montre schématiquement un dispositif pour la mise en oeuvre du procédé selon l'invention. Le dispositif comprend :
- un support numérique de stockage de masse 1 tel qu'un disque dur sur lequel est stocké un flux 7 de données contenant des images codées selon la norme MPEG ;
- une mémoire tampon 2 destinée à stocker une portion 5 du flux de données compressées après lecture sur le disque dur 1 ;
- un décodeur vidéo 3, en particulier un décodeur MPEG, qui est capable de décoder une image MPEG définie notamment par sa position dans la mémoire tampon 2 ;
- un module d'affichage 4, adapté pour lire les images décodées et les traduire dans le format utilisé pour l'affichage, par exemple le format PAL, SECAM ou NTSC. Il permet en outre la sélection des trames dans le cas d'images entrelacées,
- une unité de commande 10 qui supervise le fonctionnement du dispositif et qui commande le décodeur 3 et le module d'affichage 4. L'unité 10 applique les règles suivantes en fonction de la valeur d'un retard d'affichage (dont le calcul est explicité ci-après) :
   a/ à chaque instant d'affichage, on affiche celle des images décodées disponibles pour l'affichage et venant avant l'image théorique correspondant audit instant d'affichage dans l'ordre d'affichage des images à la vitesse nominale, qui est la plus proche de ladite image théorique suivant ledit ordre d'affichage ;
   b/ si le retard d'affichage est inférieur ou égal à un seuil N1, on décode toutes les images ;
   c/ si le retard d'affichage est supérieur à N1 et inférieur ou égal à un seuil N2, on ne décode et on n'affiche pas les images de type B ;
   d/ si le retard d'affichage est supérieur à N2 et inférieur ou égal à un seuil N3, on ne décode pas et on n'affiche pas les images de type B, certaines au moins des images de type P, ni les images prédites à partir de ces images de type P;
   e/ si le retard d'affichage est supérieur à N3 et inférieur ou égal à un seuil N4, on ne décode et on n'affiche que les images de type I ;
   f/ si le retard d'affichage est strictement supérieur à N4, on fait un saut dans les données à décoder.

Les étapes du procédé selon l'invention vont maintenant être exposées en référence au diagramme de la figure 2.

Le procédé démarre à la réception 21 d'une commande de lecture en marche avant, à une vitesse théorique xN, des images contenues dans le flux 7 stocké sur le disque dur 1. Dans une étape 22, la mémoire tampon 2 est chargée avec une première portion 5 du flux de données compressées contenant des images codées selon la norme MPEG. Une phase d'analyse 23 de la portion de flux 5 comprend l'identification notamment des codes de démarrage ("Start Code") permettant le décodage des GOP au sens de la norme MPEG, de définir le type I, P ou B des images et l'estampille temporelle de présentation ("Presentation Time Stamp" ou PTS) au sein d'un GOP associée à chacune des images.

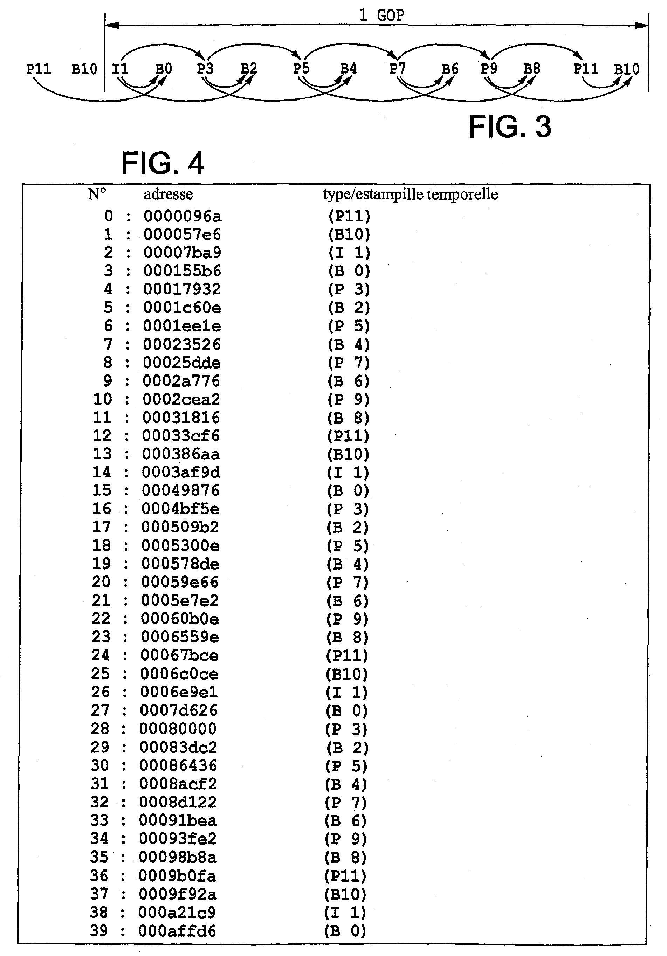

La figure 3 représente les images constituant un GOP de douze images et les liens de prédiction entre les images de ce GOP. Chaque image du GOP est identifiée par son type I, P ou B et par un numéro compris entre 0 et 11 correspondant à son estampille PTS qui détermine son ordre d'affichage en marche avant à une vitesse nominale (x1) au sein du GOP. Ainsi B0 est une image de type B qui doit être affichée la première parmi celles du GOP ; puis viennent dans l'ordre d'affichage en marche avant I1 (image de type I), puis P3 (image de type P), suivie de B4 etc. L'origine d'une flèche marque une image de référence, et la pointe de flèche indique l'image prédite à partir de cette image de référence. Ainsi B0 est prédite à partir de l'image P11 du GOP précédent, et en outre à partir de l'image I1 du GOP représenté. I1 est une image dite "intra codée". B2 est prédite à partir de P3 et I1. P3 est prédite à partir de I1, P5 à partir de P3 etc.

Le tableau de la figure 4 présente un exemple de portion 5 de flux de données compressées ayant fait l'objet de la phase d'analyse 23. Cette portion comprend 40 images, identifiées sur le tableau par un numéro d'ordre compris entre 0 et 39, qui est destiné à faciliter la lecture. La première colonne contient ce numéro d'ordre. La seconde colonne contient l'adresse dans la mémoire tampon 2 du début des données relatives à l'image compressée identifiée par le numéro d'ordre de la première colonne. La troisième colonne contient le type d'image et l'estampille temporelle qui indique le numéro d'ordre (pour un affichage à la vitesse nominale) dans le GOP auquel appartient l'image considérée.

Dans l'exemple considéré à la figure 4, les images contenues dans la portion du flux 5 appartiennent un certain nombre de GOP de structure similaire à celle représentée en figure 3. De plus, le début des images décodables se situe à l'image numéro 2 de la liste, qui est l'image I1 du premier GOP entier. Cette image intra codée permet de décoder certaines au moins des images du GOP dont elle fait partie, de l'image n°3 (B0) à l'image n°12 (P11). Les images sont ici présentées dans l'ordre de décodage et non l'ordre d'affichage.

Si la vitesse V d'affichage théorique initiale est égale à xN, alors la base de temps virtuelle est de N images passées par VSYNC, ce qui revient à afficher une image toutes les N images à chaque événement VSYNC. Si on note VSYNC(0) l'événement de synchronisation verticale correspondant à l'affichage de l'image n°2 (image I1), il convient d'afficher, selon la base de temps virtuelle théorique au p-ième événement de synchronisation à partir de VSYNC(0) noté VSYNC(p), la (Nxp)-ième image venant après I1 dans l'ordre d'affichage, à la vitesse nominale (x1).

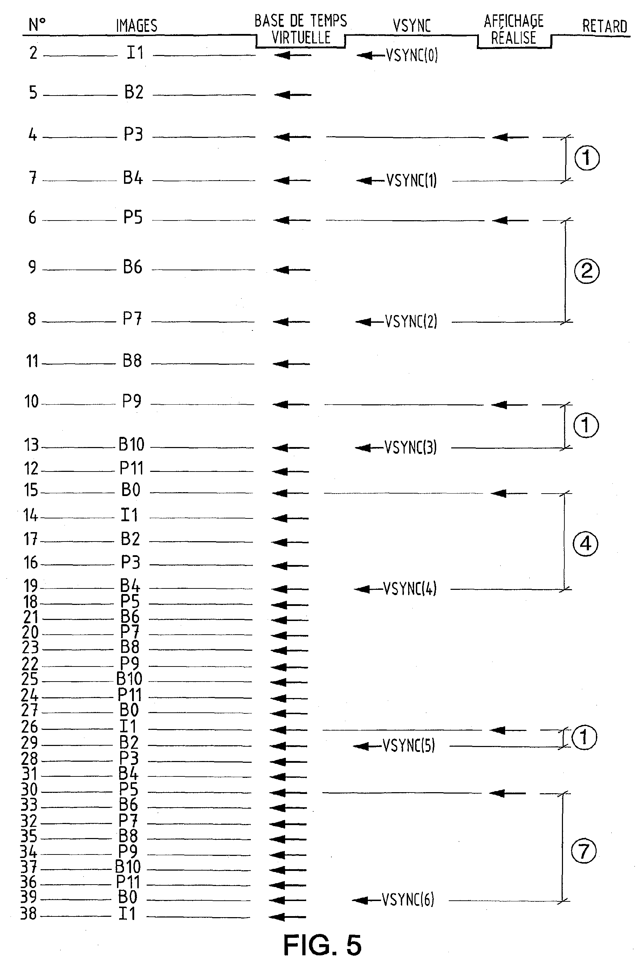

La figure 5 représente les images décodées à partir de l'image n°2 (image I1), mais dans l'ordre d'affichage en marche avant. La première colonne contient le numéro d'ordre associé à cette image d'après la première colonne du tableau de la figure 4. La deuxième colonne indique pour chaque image le type et le numéro d'ordre dans son GOP. La troisième colonne contient des flèches horizontales qui indiquent les événements de la base de temps virtuelle : il y a N événements selon la base de temps virtuelle pour un VSYNC (le temps entre deux VSYNC étant constant par exemple 0,04 s). La quatrième colonne contient des flèches horizontales sur les lignes correspondant à l'image théorique affichée selon la vitesse théorique V, aux VSYNC. La cinquième colonne contient des flèches horizontales sur les lignes correspondant à l'image affichée réellement à chaque VSYNC. Enfin, la sixième et dernière colonne contient des traits verticaux qui donnent une représentation du retard à chaque événement de la base de temps d'affichage, et les nombres dans les cercles indiquent le retard en terme de nombre d'images, tel que calculé ci-dessous.

Ainsi, le décodage est fait dans une étape 25 (figure 2) de façon séquentielle sur l'ensemble des images, en marche avant.

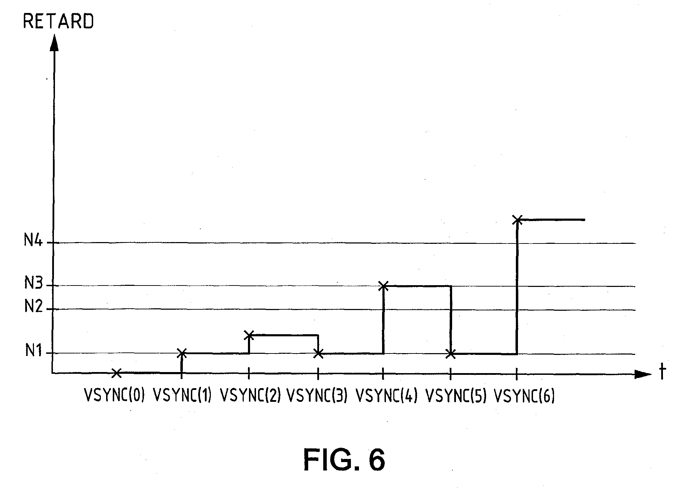

Sur le graphe de la figure 6 est représentée en ordonnée la valeur du retard à des instants VSYNC(1 ) à VSYNC(6), par rapport aux seuils N1, N2, N3 et N4 dans les opérations de décodage et d'affichage considérées dans un exemple de mise en oeuvre du procédé selon l'invention exposé ci-dessous.

A l'instant VSYNC(1 ), l'image à afficher selon la vitesse théorique xN est déterminée dans une étape 26 selon la base de temps virtuelle. Il s'agit de l'image n°7 (B4), dans le cas où la vitesse théorique retenue est par exemple égale à x3.

Or, après le décodage de l'image I1, le décodeur doit effectuer, dans cet ordre, le décodage de l'image n°4 (P3) nécessaire pour décoder B2, puis de l'image n°5 (B2), et de l'image n°6 (P5), avant de pourvoir décoder B4. Dans l'exemple considéré, à l'instant VSYNC(1 ), l'image en cours de décodage est l'image n°5 (B2) et l'image n°7 (B4) n'est pas encore décodée. C'est pourquoi on affiche dans une étape 27 à l'instant VSYNC1, l'image qui est décodée et disponible pour l'affichage, qui vient avant l'image n°7 (B4) dans l'ordre d'affichage à la vitesse nominale, et qui est la plus proche de l'image n°7 (B4). Il s'agit ici de l'image n°4 (P3), qui est disponible puisque utile au décodage de B2.

La base de temps virtuelle représentée dans la troisième colonne du tableau de la figure 5, se base sur un paramètre théorique trois images passées par VSYNC, soit les images n°5, 4 et 7 ( respectivement B2, P3 et B4). Dit autrement, la base de temps théorique est ici définie par le paramètre M/Q avec M=3 et Q=1. Selon cette base de temps théorique, l'image à afficher à VSYNC(1 ) devrait être, comme l'indique la quatrième colonne du tableau de la figure 5, l'image n°7 (B4). L'image réellement affichée est identifiée par la flèche de la cinquième colonne du tableau, pointant sur l'image n°4 (P3).

Dans une étape 28, on calcule ensuite le retard de l'affichage par rapport à la vitesse théorique. Il est égal dans ce cas à une image (B4) et est représenté dans la sixième colonne du tableau de la figure 5.

Puis, dans une étape 29, le retard est comparé à quatre seuils N1, N2, N3 et N4, qui dans un exemple sont respectivement de une image, trois images, quatre images et sept images. Dans l'exemple considéré, le retard n'est pas strictement supérieur au premier seuil N1. C'est pourquoi toutes les images continuent à être décodées et affichées, selon la règle b/ indiquée ci-dessus.

Le décodage 25 se poursuit. A l'instant VSYNC(2), une nouvelle étape 26 a lieu dans laquelle on calcule la prochaine image à afficher suivant la base de temps théorique. Il s'agit de la troisième image à afficher après l'image n°7 (B4) soit l'image n°8 (P7). Or entre VSYNC(1 ) et VSYNC(2), le décodeur a terminé le décodage de l'image n°5 (B2), puis celui de l'image n°6 (P5), et est en cours de décodage de l'image n°7 (B4) à partir des images n°4 et n°6, soit P3 et P5 respectivement. A l'instant VSYNC (2), l'image n°8 (P7) n'est pas encore disponible. L'image la plus proche dans l'ordre d'affichage à la vitesse nominale est l'image n°6 (P5), qui va donc être affichée. Le retard est de deux images et est donc égal au seuil N2. La règle c/ va donc être maintenant appliquée. Les images prédites de type B ne vont plus être décodées ni affichées.

L'image à afficher à l'instant VSYNC(3) selon la vitesse théorique xN est l'image n°13 (B10). Le décodage se poursuit : l'image n°8 (P7), puis l'image n°10 (P9) sont décodées. L'image n°9 (B6) n'est pas décodée. A l'instant VSYNC(3), l'image n°12 (P11) est en cours de décodage. L'image n°10 (P9) est donc affichée. Le retard n'est plus que d'une image. On se trouve dans le cas de la règle b/ et le décodage de l'ensemble des images peut reprendre.

On suppose que l'utilisateur augmente alors la vitesse théorique d'affichage, qui passe à x6, ce qui signifie que la base de temps théorique est définie par le paramètre M/Q avec M=6 et Q=1. Ainsi, l'image à afficher à l'instant VSYNC(4) est l'image n°19 (B4). Le décodage 25 se poursuit sur les images n°13 à n°15. A l'instant VSYNC(4), l'image n°16 (P3) est en cours de décodage. De plus, l'image alors décodée la plus proche de l'image n°19 (B4) est l'image n°15 (B0). Le retard est de quatre images. La règle d/ va donc maintenant être appliquée.

On suppose que la vitesse théorique d'affichage est à nouveau augmentée et passe à x10. Le paramètre M/Q est tel que M=10 et Q=1. L'image à afficher à l'instant VSYNC(5) est l'image n°29 (B2). Le décodage se poursuit sur l'image n°14 (image de type I), les images B ne sont pas décodées et l'image n° 16 (P3) ainsi donc que les images de type P prédites à partir de P3, soit les images n° 18, 20, 22, 24 ne sont pas décodées. L'image n° 26 (I1), puis l'image n°28 (P3) est décodée.

A l'instant VSYNC(5), l'image n°29 (B2) n'est pas décodée. C'est donc l'image n°26 (I1) qui est affichée car c'est l'image décodée disponible pour l'affichage devant être affichée dans l'ordre de marche avant à vitesse nominale avant l'image n°29 (B2) et qui est la plus proche de l'image n°25. Le retard est de une image. Toutes les images vont de nouveau être décodées. Le décodage se fait sur les images n°29, 30 et 31.

A l'instant VSYNC(6), le décodage est en cours sur l'image n°31 alors que l'image n°39 devrait être affichée. Le retard est de 8 images et dépasse le seuil N4 (cas e/). Un saut d'image est donc effectué dans les données à décoder dans le but d'atteindre l'image à afficher suivante, soit l'image n°49. Cette image ne figure pas dans la portion de flux 5 contenue dans la mémoire de trame 2. Il faut donc effectuer un saut dans la lecture des données du flux de données compressées qui sont stockées sur le disque. Comme aucune information n'est disponible pour localiser l'image correspondante sur le disque, une évaluation de sa localisation est réalisée en sautant une quantité de données égale au nombre d'images à sauter multiplié par le débit binaire moyen de la lecture sur le disque dur.

Il a été constaté en pratique que, dans des applications classiques, pour des vitesses comprises entre 0 et x2, le décodeur est capable de décoder toutes les images et de les afficher en temps voulu. Pour des vitesses comprises entre x2 et x6, les images B sont sautées car le retard dépasse généralement une image. Pour des vitesses entre x6 et x10, des images de type P sont sautées. Pour des vitesses supérieures à x10, si le retard n'est pas régulé par le fait de n'afficher que des images I, des sauts sont effectués dans les données à décoder.

## Revendications

1. Procédé de décodage et d'affichage en marche avant à une vitesse théorique xN déterminée, où N est un nombre supérieur à zéro correspondant à un facteur de vitesse d'affichage par rapport à une vitesse nominale x1 d'images codées selon la norme MPEG comprenant des images de type I et des images prédites de type P et/ou de type B qui sont stockées sur un support numérique de stockage de masse (1) sous la forme d'un flux de données compressées (7) correspondant à un programme audiovisuel déterminé, le procédé comprenant les étapes consistant à :
- évaluer (28) en temps réel à des instants d'affichage respectifs déterminés, un retard des images affichées par rapport à des images théoriques déterminées par un affichage à ladite vitesse théorique, et
- si ledit retard est inférieur à un premier seuil (N1) déterminé, décoder toutes les images du flux de données ;
- si le retard est supérieur audit premier seuil, ne plus décoder certaines au moins des images prédites du flux de données ; et
- à chaque instant d'affichage, afficher celle des images décodées disponibles pour l'affichage et venant avant l'image théorique correspondant audit instant d'affichage dans l'ordre d'affichage des images à la vitesse nominale, qui est la plus proche de ladite image théorique suivant ledit ordre d'affichage.

2. Procédé selon la revendication 1, suivant lequel les images prédites comprennent des images de type B, et suivant lequel, si le retard est supérieur au premier seuil, on ne décode plus et donc on n'affiche plus lesdites images prédites de type B.

3. Procédé selon la revendication 2 suivant lequel les images prédites comprennent des images de type P et suivant lequel, si le retard est supérieur à un deuxième seuil (N2), on ne décode plus et donc on n'affiche plus certaines au moins des images prédites de type P, ni les images prédites à partir desdites images de type P.

4. Procédé selon la revendication 3 suivant lequel, si le retard est supérieur à un troisième seuil (N3), on ne décode plus et donc on n'affiche plus que les images de type I.

5. Procédé selon la revendication 4 suivant lequel, si le retard est supérieur à un quatrième seuil (N4), on effectue un saut en avant dans le flux de données compressées.

6. Procédé selon l'une quelconque des revendications précédentes, suivant lequel le retard d'affichage est défini en tant que nombre d'images de retard, à partir d'une base de temps virtuelle calée sur des événements de synchronisation verticale (VSYNC) de l'affichage, en comparant l'image affichée à celle qui devrait être affichée conformément à ladite base de temps virtuelle.

7. Procédé selon la revendication 5 et la revendication 6, suivant lequel le nombre d'octets du flux de données numériques qui sont sautés en avant pour la lecture sur le support numérique de stockage de masse du flux de données est déterminé à partir du nombre d'images de retard et du débit binaire moyen de la lecture dudit flux de données compressées sur le support numérique de stockage de masse.

8. Procédé selon la revendication 6 ou la revendication 7, suivant lequel la base de temps virtuelle est définie par un paramètre égal à un nombre théorique d'images passées par événement de synchronisation verticale de l'affichage.

9. Procédé selon l'une quelconque des revendications précédentes, suivant lequel la vitesse d'affichage est commandée par un utilisateur, et peut être la vitesse nominale ou une vitesse accélérée par rapport à ladite vitesse nominale.

10. Procédé selon l'une des revendications 8 à 9, suivant lequel le paramètre égal au nombre théorique d'images passées par événement de synchronisation verticale est du type M/Q où M et Q sont des nombres entiers et où la fraction M/Q est réduite.

11. Dispositif de décodage et d'affichage en marche avant à une vitesse théorique xN déterminée, où N est un nombre supérieur à zéro correspondant à un facteur de vitesse d'affichage par rapport à une vitesse nominale x1 d'images codées selon la norme MPEG comprenant des images de type I et des images prédites de type P et/ou de type B qui sont stockées sur un support numérique de stockage de masse (1) sous la forme d'un flux de données compressées (7) correspondant à un programme audiovisuel déterminé, **caractérisé en ce qu'**il comprend :
- des moyens pour évaluer en temps réel à des instants d'affichage respectifs déterminés, un retard des images affichées par rapport à des images théoriques déterminées par un affichage à ladite vitesse théorique, et ;
- des moyens pour, si ledit retard est inférieur à un premier seuil (N1) déterminé, décoder toutes les images du flux de données ;
- des moyens pour si le retard est supérieur audit premier seuil, ne plus décoder certaines au moins des images prédites du flux de données et ;
- des moyens pour, à chaque instant d'affichage, afficher celle des images décodées disponibles pour l'affichage et venant avant l'image théorique correspondant audit instant d'affichage dans l'ordre d'affichage des images à la vitesse nominale, qui est la plus proche de ladite image théorique suivant ledit ordre d'affichage.

12. Dispositif selon la revendication 11, dans lequel les images prédites comprennent des images de type B, et **caractérisé en ce qu'**il comprend des moyens pour, si le retard est supérieur au premier seuil, ne décoder plus et donc ne plus afficher lesdites images prédites de type B.

13. Dispositif selon la revendication 12, dans lequel les images prédites comprennent des images de type P, **caractérisé en ce qu'**il comprend des moyens pour, si le retard est supérieur à un deuxième seuil (N2), ne plus décoder et donc ne plus afficher certaines au moins des images prédites de type P, ni les images prédites à partir desdites images de type P.

14. Dispositif selon la revendication 13 **caractérisé en ce qu'**il comprend des moyens pour, si le retard est supérieur à un troisième seuil (N3), ne plus décoder et donc ne plus afficher que les images de type I.

15. Dispositif selon la revendication 14 **caractérisé en ce qu'**il comprend des moyens pour, si le retard est supérieur au quatrième seuil (N4), effectuer un saut en avant dans le flux de données compressées.

16. Dispositif selon l'une quelconque des revendications 11 à 15, **caractérisé en ce qu'**il comprend une base de temps virtuelle calée sur des événements de synchronisation verticale (VSYNC) de l'affichage et que les moyens pour calculer le retard défini en tant que nombre d'images de retard, opèrent en comparant l'image affichée à celle qui devrait être affichée conformément à ladite base de temps virtuelle.

17. Dispositif selon la revendication 15 et selon la revendication 16, **caractérisé en ce que** les moyens pour effectuer le saut pour la lecture sur le support numérique de stockage de masse du flux de données opèrent en sautant un nombre d'octets du flux de données numériques déterminé à partir du nombre d'images de retard et du débit binaire moyen de la lecture dudit flux de données compressées sur le support numérique de stockage de masse.

18. Dispositif selon la revendication 16 ou la revendication 17, **caractérisé en ce que** la base de temps virtuelle est définie par un paramètre égal à un nombre théorique d'images passées par événement de synchronisation verticale de l'affichage.

19. Dispositif selon l'une quelconque des revendications 11 à 18, **caractérisé en ce que** la vitesse d'affichage est commandée par un utilisateur, et peut être une vitesse nominale ou une vitesse accélérée par rapport à ladite vitesse nominale.

20. Dispositif selon l'une des revendications 18 à 19, **caractérisé en ce que** le paramètre égal au nombre théorique d'images passées par événement de synchronisation verticale est du type M/Q, où M et Q sont des nombres entiers et où la fraction M/Q est réduite.

21. Circuit pilote vidéo **caractérisé en ce qu'**il comprend un dispositif selon l'une des revendications 11 à 20.

22. Boîtier décodeur **caractérisé en ce qu'**il comprend un circuit pilote vidéo selon la revendication 21.
